Europäisches Patentamt

European Patent Office

Office européen des brevets

(11) Veröffentlichungsnummer: **0 248 329**
A2

## (12) EUROPÄISCHE PATENTANMELDUNG

(21) Anmeldenummer: 87107643.6

(22) Anmeldetag: 26.05.87

(51) Int. Cl.³: **H 04 N 3/195**

(30) Priorität: 05.06.86 DE 3618953

(43) Veröffentlichungstag der Anmeldung:
09.12.87 Patentblatt 87/50

(84) Benannte Vertragsstaaten:
AT BE CH DE ES FR GB GR IT LI LU NL SE

(71) Anmelder: EWD Electronic-Werke Deutschland GmbH

D-7730 Villingen-Schwenningen(DE)

(72) Erfinder: Pollak, Alfred
Am Kanonenwall 3
D-3000 Hannover(DE)

(74) Vertreter: Einsel, Robert, Dipl.-Ing.
E W D Electronic-Werke Deutschland GmbH Patent- und
Lizenzabteilung Göttinger Chaussee 76
D-3000 Hannover 91(DE)

(54) Amplitudenspule für die Zeilenendstufe eines Fernsehempfängers.

(57) Amplitudenspule zur Einstellung der Zeilenamplitude in einem Fernsehempfänger, die als Differentialspule mit einer Spule (12) in Reihe und einer Spule (13) parallel zu den Ablenkspulen (8) ausgebildet ist. Erfindungsgemäß sind die Spulen auf einem Kammer-Spulenkörper (14) mit derart unterschiedlicher Windungsverteilung angeordnet, daß mit einem Kern (16) die gegenläufige Änderung der Induktivitäten der beiden Spulen (12,13) erfolgt.

Fig.2

EP 0 248 329 A2

## Amplitudenspule für die Zeilenendstufe eines Fernsehempfängers

In einem Fernsehempfänger erfolgt bekanntlich die Zeilenablenkung mit Zeilenablenkspulen, in denen mit einem Zeilentrafo und einem mit der Zeilenfrequenz betätigten Schalter in Form eines Schalttransistors ein sägezahnförmig ansteigender Strom erzeugt wird. Zur Einstellung der Ablenkamplitude und damit der Bildbreite muß die Amplitude des die Zeilenablenkspulen durchfließenden Stromes einstellbar sein.

Durch Änderung der Steuerung des Zeilenendstufentransistors ist die Amplitude der Zeilenablenkung nicht ohne weiteres beeinflußbar, weil dieser Transistor als Schalter arbeitet und der Maximalwert des Ablenkstromes dabei lediglich von der konstanten Zeilenhinlaufdauer abhängig ist. Es ist zwar denkbar, in Reihe mit den Ablenkspulen einen einstellbaren Widerstand einzuschalten. Dieser würde jedoch in unerwünschter Weise Verlustleistung bewirken und die Linearität der Ablenkung beeinflussen.

Es ist bekannt, in Reihe mit den Ablenkspulen eine einstellbare Induktivität einzuschalten, die nur geringe Verlustleistung bewirkt und die Linearität der Ablenkung nicht beeinträchtigt. Durch Änderung dieser als Amplitudenspule bezeichneten Induktivität ändern sich in unerwünschter Weise die Gesamt-Impedanz des aus der Amplitudenspule und den Ablenkspulen bestehenden Netzwerkes, der der Zeilenendstufe entnommene Strom, die Abstimmung der Zeilenendstufe auf eine bestimmte Harmonische der Rücklauffrequenz, die Rücklaufzeit, die Amplitude des Rücklaufimpulses und damit auch der Wert der daraus durch Gleichrichtung erzeugten Hochspannung.

Es ist daher bekannt (DE-AS 14 37 846), die Amplitudenspule als sogenannte Differentialspule auszubilden. Die Amplitudenspule enthält dazu zwei Induktivitäten, von denen die erste in

H86/034/HNR

Reihe und die zweite parallel zu der Ablenkspule liegt. Zur
Änderung des Stromes durch die Ablenkspule werden die beiden
Induktivitäten gegensinnig so geändert, daß die Gesamt-Impedanz des gebildeten Netzwerkes und auch die übrigen genannten
Werte bei der Einstellung des Ablenkstromes unverändert bleiben. Die beiden Induktivitäten sind dabei z.B. durch zwei Arbeitswicklungen eines Transduktors gebildet, deren Werte durch
eine gemeinsame Steuerwicklung gegensinnig geändert werden.
Die Steuerung der Induktivitätswerte erfolgt dabei vorzugsweise zur sogenannten Ost-West-Kissenkorrektur, d.h. zur dynamischen Änderung der Zeilenablenkamplitude mit der Vertikalfrequenz.

Wenn eine derartige Differentialspule mit zwei gegensinnig veränderbaren Induktivitäten als manuell einstellbare Amplitudenspule ausgebildet sein soll, ist die Realisierung des Gleichlaufes bei der Einstellung relativ schwierig. Es müssen praktisch zwei Spulen mit je einem Kern vorgesehen sein, wobei beide Kerne im Gleichlauf verstellbar sein müssen.

Der Erfindung liegt die Aufgabe zugrunde, eine konstruktiv einfache Amplitudenspule in Form einer Differentialspule zu schaffen, die auf einfache Weise durch Betätigung nur eines einzigen Einstellmittels einstellbar ist.

Diese Aufgabe wird durch die im Anspruch 1 beschriebene Erfindung gelöst. Vorteilhafte Weiterbildungen der Erfindung sind
in den Unteransprüchen beschrieben.

Die Erfindung beruht auf folgender Erkenntnis. Durch eine geschickte Aufteilung der Windungen der beiden die Differentialspule bildenden, in der Induktivität gegensinnig veränderbaren
Spulen auf die Kammern eines Kammer-Spulenkörpers mit unterschiedlicher Windungsverteilung ist es möglich, mit einem einzigen Kern die gewünschte gegensinnige Änderung der Induktivitätswerte der beiden Spulen zu erreichen. Vorzugsweise ist die

H86/034/HNR

erste, in Reihe mit den Ablenkspulen liegende Spule vollständig in einer ersten Kammer untergebracht, während die zweite,
parallel zu den Ablenkspulen liegende Spule auf mehrere, auf
derselben Seite der ersten Kammer liegende Kammern aufgeteilt
ist. Dabei ist die Windungszahl in diesen Kammern unterschiedlich und nimmt vorzugsweise von der der ersten Kammer benachbart liegenden Kammer bis zum Ende des Spulenkörpers hin zu.
Die optimale Aufteilung der zweiten Wicklung auf die Kammern
und das Windungsverhältnis zwischen den Kammern zur Erzielung
des gewünschten Gleichlaufes läßt sich vorzugsweise empirisch
ermitteln.

Die Erfindung wird anhand der Zeichnung erläutert. Darin zeigen
Fig. 1    das Schaltbild einer Zeilenendstufe mit der
          Amplitudenspule und
Fig. 2    den konstruktiven Aufbau der in Fig. 1 verwendeten
          Amplitudenspule.

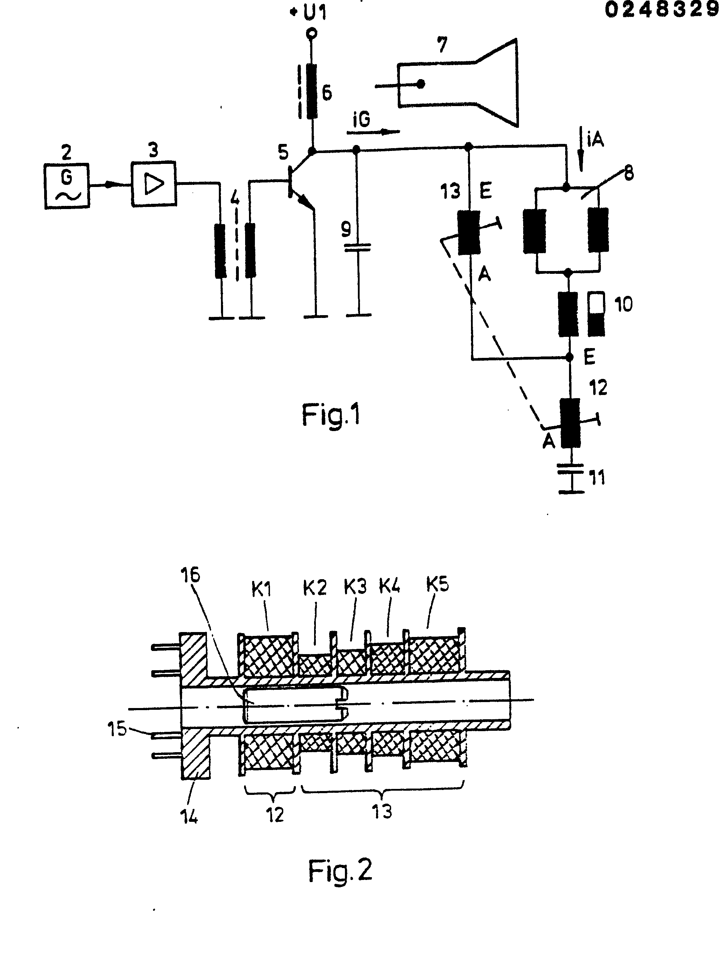

In Fig. 1 ist der Zeilenablenkgenerator 2 durch das empfangene
Fernsehsignal auf die Zeilenfrequenz synchronisiert. Der Generator 2 steuert über die Treiberstufe 3 und den Treibertransformator 4 den Zeilenendstufentransistor 5 mit einer zeilenfrequenten Schaltspannung derart, daß in der Primärwicklung 6 des
Zeilentransformators ein sägezahnförmiger, zeilenfrequenter
Strom fließt. Dadurch wird in den Ablenkspulen 8 der zeilenfrequente Ablenkstrom iA erzeugt. Der Rücklaufkondensator 9 dient
zur Abstimmung der gesamten Schaltung und zur Erzielung der
gewünschten Bedingungen beim Zeilenrücklauf. Die Zeilenablenkspulen 8 bewirken die Zeilenablenkung des Elektronstrahls in
der Bildröhre 7. In Reihe zu den Ablenkspulen 8 liegen noch
die sogenannte Linearitätsspule 10 sowie der Kondensator 11,
der als Koppelkondensator zur Gleichspannungstrennung und zur
Tangensentzerrung dient.

H86/034/HNR

Zur Einstellung der Amplitude des Ablenkstromes iA in den Ablenkspulen 8 ist die Differentialspule mit den beiden Spulen 12, 13 vorgesehen, wobei die Spule 12 in Reihe und die Spule 13 parallel zu den Ablenkspulen 8 liegt. Die Spulen 12, 13 sind derart gegensinnig in der Induktivität veränderbar, daß bei der Einstellung sich der Ablenkstrom iA zur Einstellung der gewünschten Bildbreite ändert, die durch die Bauteile 8, 10, 11, 12, 13 gebildete Impedanz, der der Zeilenendstufe entnommene Gesamtstrom iG und damit die übrigen Werte wie Abstimmung, Rücklaufzeit, Hochspannung usw. unverändert bleiben.

Fig. 2 zeigt die Ausbildung der durch die Spulen 12, 13 gebildeten Amplituden-Differentialspule. Die beiden Spulen 12, 13 sind auf einem gemeinsamen Kammer-Spulenkörper 14 untergebracht, der vier Anschlußstifte 15 für die insgesamt vier Enden dieser beiden Spulen aufweist. Alle Windungen der Spule 12 liegen in der ersten Kammer K1. Die Windungen der Spule 13 sind auf die darauffolgenden Kammern K2, K3, K4, K5 aufgeteilt, wobei die Zahl der Windungen zum Ende des Spulenkörpers 14 hin zunimmt. In dem Spulenkörper 14 ist der Kern 16 mittels Gewinde verstellbar gelagert und hat etwa eine Länge gleich der Breite von zwei bis drei Kammern. Bei Verstellung des Kerns 16 nach rechts wird die Induktivität der Spule 12 verkleinert und die der Spule 13 vergrößert, was einer Erhöhung des Ablenkstromes iA und damit der Bildbreite entspricht. Bei einer Verstellung des Kernes 16 nach links wird die Induktivität der Spule 12 vergrößert und die der Spule 13 verkleinert, was einer Verringerung des Ablenkstromes und damit der Bildbreite entspricht.

In der Beschreibung wurde angenommen, daß die beiden Spulen 12,13 in der Induktivität gegensinnig veränderbar, aber nicht miteinander transformatorisch gekoppelt sind. Da die beiden Spulen 12,13 auf demselben Spulenkörper mit gemeinsamen Kern angeordnet sind, ist eine in diesem Fall nicht notwendige Verkopplung der beiden Spulen 12,13 nicht vermeidbar. Wegen dieser vorhandenen transformatorischen Kopplung ist die Polung der beiden Spulen 12,13 nicht beliebig wählbar. Die Spulen12,13 werden daher so gepolt, daß jeweils am Anfang oder am Ende an beiden Spulen die gleiche Polarität der Spannung liegt. Z.B. liegt am Ende der Spule 12 der positive Rücklaufimpuls und am Ende der Spule 13 ebenfalls der positive Rücklaufimpuls gegenüber dem Anfang. Die Spulen 12,13 sind also hinsichtlich der Richtung des durchfließenden Stromes gleichsinnig gepolt. In Fig. 1 ist dieses durch die Symbole A (Anfang) und E (Ende) angedeutet.

Bei einem praktisch erprobten Ausführungsbeispiel für Fig. 2 lagen folgende Werte vor:

<u>Windungszahlen:</u>

| Kammer 1: | 90 |
| Kammer 2: | 100 |
| Kammer 3: | 200 |
| Kammer 4: | 300 |
| Kammer 5: | 700 |

Drahtdicke der Spule 12: 0,45 Lack
Drahtdicke der Spule 13: 0,15 Lack
Widerstand der Spule 12: 0,5 Ohm
Widerstand der Spule 13: 49 Ohm
Induktivität der Spule 12: 61 - 286 $\mu$H
Induktivität der Spule 13: 8,3 - 36 mH

<u>Wickelbreite der Kammern:</u>

| K1: | 10 | mm |
| K2: | 5 | mm |
| K3: | 5 | mm |
| K4: | 5 | mm |
| K5: | 10 | mm |

Durchmesser des Kerns 16: 7 mm
Länge des Kerns 16: 23 mm

EWD
Electronic-Werke Deutschland GmbH
7730 Villingen-Schwenningen

Hannover, den 12.05.1986
PTL-Wp/ds        H 86/034


Patentansprüche


1.  Amplitudenspule für die Zeilenendstufe eines Fernsehempfängers mit zwei Spulen (12, 13) einstellbarer Induktivität,
    von denen die erste (12) in Reihe und die zweite (13) parallel zur Ablenkspule (8) liegt, dadurch gekennzeichnet,
    daß die Spulen (12, 13) auf einem Kammerspulenkörper (14)
    mit unterschiedlicher Windungszahl in den einzelnen Kammern (K1 - K5) angeordnet sind und in dem Spulenkörper
    (14) ein gemeinsamer, verstellbarer Kern (16) vorgesehen
    ist.

2.  Spule nach Anspruch 1, dadurch gekennzeichnet, daß alle
    Windungen der ersten Spule (12) in einer ersten Kammer
    (K1) liegen und die zweite Spule (13) in Teilwicklungen
    mit unterschiedlichen Windungszahlen aufgeteilt ist, die
    in Kammern (K2 - K5) auf derselben Seite der ersten Kammer
    (K1) liegen.

3.  Spule nach Anspruch 2, dadurch gekennzeichnet, daß die Win-
    dungszahl der Teilwicklungen von der der ersten Kammer

H86/034/HNR

(K1) benachbart liegenden Kammer (K2) bis zum Ende des Spulenkörpers (14) zunimmt.

4. Spule nach Anspruch 3, dadurch gekennzeichnet, daß die Zunahme etwa im Verhältnis 1 : 2 : 3 : 7 erfolgt.

5. Spule nach Anspruch 2 - 4, dadurch gekennzeichnet, daß die Windungszahlen für die erste Spule (12) etwa 90 und für die Teilwicklungen der zweiten Spule (13) etwa 100, 200, 300, 700 beträgt.

6. Spule nach Anspruch 1, dadurch gekennzeichnet, daß die Länge des Kerns (16) etwa gleich der Breite von 2 - 3 Kammern ist.

7. Spule nach Anspruch 1, dadurch gekennzeichnet, daß die beiden Spulen (12,13) hinsichtlich des durchfließenden Stromes gleichsinnig gepolt sind.

8. Spule nach Anspruch 7, dadurch gekennzeichnet, daß bei durchgehender Wicklung mit gleichem Wicklungssinn das Ende (E) der ersten Spule (12) mit dem Anfang (A) der zweiten Spule (13) verbunden ist.

H86/034/HNR

Fig.1

Fig.2